# EUROPEAN PATENT APPLICATION

(11) **EP 4 082 351 A1**
(43) Date of publication of application: **02.11.2022**
(21) Application number: 20908182.7
(22) Date of filing: 24.12.2020
(51) Int. Cl.: A23F 3/16

(54) **GREEN TEA BEVERAGE WITH ENHANCED FLAVOR**

(30) Priority: 27.12.2019 JP 2019238864; 27.12.2019 JP 2019238869
(71) Applicant: Suntory Holdings Limited, Osaka 530-8203 (JP)
(72) Inventor: MUTOH, Mari, Kawasaki-shi, Kanagawa 211-0067 (JP); YANAGIDA, Akinobu, Kawasaki-shi, Kanagawa 211-0067 (JP); IBUSUKI, Daigo, Kawasaki-shi, Kanagawa 211-0067 (JP)
(74) Representative: Vossius & Partner Patentanwälte Rechtsanwälte mbB
(86) International application number: PCT/JP2020/048371
(87) International publication number: WO 2021/132439

(57) **Abstract**

An object of the present invention is to provide a technique of enhancing a profound and rich taste in a green tea beverage.

The profound and rich taste of a green tea beverage can be enhanced by incorporating caffeic acid or chlorogenic acid in the green tea beverage.

## Description

### TECHNICAL FIELD

The present invention relates to a technique of enhancing the taste of a green tea beverage. More particularly, this invention relates to a technique of enhancing a profound and rich taste like *Gyokuro* tea in a green tea beverage.

### BACKGROUND ART

As consumer preferences are diversified, there has been a demand for a tea beverage having a differentiated or high-valued aroma. In particular, consumers demand not only green tea beverages intended for hydration (*i.e.*, thirst-quenching) purposes, which taste clean and are easy to drink so that people can gulp quickly in large quantities, but also highly palatable green tea beverages which give a sense of fulfillment (also called "robustness") after drinking, such as those green tea beverages having strong bitterness and astringency or having a rich *umami* taste. Therefore, many highly palatable green tea leaves characterized by their sweet taste, *umami* taste, etc. have been distributed and commercialized in the market.

In recent years, packaged green tea beverages which are readily drinkable have been prevailing in the market. Some green tea materials, like high-grade *Gyokuro,* are strong in *umami* taste. However, from the viewpoints of production volume and price, it is difficult to use such high-grade tea leaves for industrial purposes as a source material for packaged green tea beverages. Also, even when such high-grade tea leaves are used, the deterioration of taste is unavoidable due to various factors, such as generation of heat deterioration odor caused by a treatment (*e.g*., heat sterilization) that is unique to the production of packaged green tea beverages, and the influence on aroma caused by addition of an alkaline component (*e.g*., sodium bicarbonate) for the purpose of enhancing storage stability. Thus, there have been many reports on techniques of enhancing the taste of a packaged green tea beverage. Examples of such reported techniques include: a technique of imparting a sense of robustness to a green tea beverage by adding trace amounts of (Z)-3-hexen-1-ol or indol (PTL 1); a technique of enhancing a body sensation and aroma by adding, to a liquid tea extract, a tea extract adjusted such that the percentages of dry solid matter content, total lipid content, phospholipid content, and ethanol concentration can fall within particular ranges (PTL 2); a technique of imparting and enhancing *umami* and *kokumi* tastes using a particular fraction of a tea extract with water and/or a water-soluble organic solvent (PTL 3); and a technique of enhancing tastes, such as a deep taste and a body sensation, by increasing the tea leaf sensation of a tea beverage using a heat-treated liquid green tea extract (PTL 4). Further, PTL 5 discloses that when 2-mercapto-3-methyl-1-butanol is added to a sugar-containing black tea beverage, there can be obtained a black tea beverage which has strong flavor characteristics such as fullness, body sensation, tea leaf sensation and a sense of fermentation, and gives one a strong sense of richness.

Meanwhile, PTL 6 discloses that the bitter and astringent tastes of a packaged beverage containing high concentrations of non-polymeric catechins can be reduced using a caffeic acid-containing coffee bean extract or hydrolysate and cyclodextrin. Also, PTL 7 discloses a technique of improving the off-tastes, such as bitterness and unfavorable aftertaste, of a beverage containing a high-intensity sweetener by use of chlorogenic acid.

### CITATION LIST

### PATENT LITERATURES

PTL 1: Japanese Unexamined Patent Application Publication No. JP 2008-148605
PTL 2: Japanese Unexamined Patent Application Publication No. JP 2019-140930
PTL 3: Japanese Unexamined Patent Application Publication No. JP 2005-137286
PTL 4: Japanese Unexamined Patent Application Publication No. JP 2013-252111
PTL 5: Japanese Unexamined Patent Application Publication No. JP 2018-201348
PTL 6: Japanese Translation of PCT International Publication No. JP 2007-166934
PTL 7: Japanese Translation of PCT International Publication No. JP 2004-528050

### SUMMARY OF INVENTION

### TECHNICAL PROBLEM

An object of the present invention is to provide a technique that can enhance the taste of a green tea beverage (particularly, a packaged green tea beverage) without using a special material.

### SOLUTION TO PROBLEM

The present inventors have made intensive studies to achieve the aforementioned object, and as a result, found that the taste of a green tea beverage can be enhanced by adding extremely trace amounts of caffeic acid or chlorogenic acid to the green tea beverage. Thus, the inventors have completed the present invention.

The present invention includes, but is not limited to, the following embodiments.
[1] A green tea beverage comprising from 0.003 to 0.14 mg of caffeic acid or from 0.07 to 5 mg of chlorogenic acid per 100 mL of the beverage.
[2] The green tea beverage as set forth in [1], having a catechin content of not more than 60 mg per 100 mL of the beverage.
[3] The green tea beverage as set forth in [1] or [2], comprising caffeic acid not derived from green tea.
[4] The green tea beverage as set forth in [1] or [2], comprising chlorogenic acid not derived from green tea.
[5] A method for producing a green tea beverage comprising from 0.003 to 0.14 mg of caffeic acid or from 0.07 to 5 mg of chlorogenic acid per 100 mL of the beverage, the method comprising adding caffeic acid or chlorogenic acid.
[6] The method as set forth in [5], wherein the green tea beverage has a catechin content of not more than 60 mg per 100 mL of the beverage.
[7] A taste enhancer for a green tea beverage, the taste enhancer comprising caffeic acid or chlorogenic acid as an active ingredient.
[8] A method for enhancing the taste of a green tea beverage comprising from 0.003 to 0.14 mg of caffeic acid or from 0.07 to 5 mg of chlorogenic acid per 100 mL of the beverage, the method comprising adding caffeic acid or chlorogenic acid.
[9] The method as set forth in [8], wherein the green tea beverage has a catechin content of not more than 60 mg per 100 mL of the beverage.

### ADVANTAGEOUS EFFECTS OF INVENTION

According to the present invention, the taste of a green tea beverage can be enhanced by a simple approach which is to add extremely trace amounts of caffeic acid or chlorogenic acid.

### DESCRIPTION OF EMBODIMENTS

### Green tea beverage

The present invention is directed to a green tea beverage. As referred to herein, the "green tea beverage" refers to a beverage prepared by adding a green tea leaf extract, and more specifically, is a generic name for beverages containing a green tea leaf extract obtained from tea leaves -- *i.e.,* tea leaves that are selected from plants of the genus *Camellia* (*e.g.*, the species *Camellia sinensis,* such as *C*. *sinensis* var. *sinensis* (including the variety *Yabukita*), *C. sinensis* var. *assamica*) and hybrids thereof, and which are classified as non-fermented tea leaves (*e.g.*, *Sencha* (brewed green tea), *Bancha* (coarse green tea), *Tencha* (non-ground tea leaves used for *Matcha*), *Kamairi-cha* (pot-roasted green teas), *Kukicha* (twig tea), *Bocha* (roasted twig tea), *Mecha* (bud tea)) -- using water, hot water, or an aqueous solution containing an extraction aid. Extraction can be carried out by employing a known method, such as kneader extraction, stirring extraction (batch extraction), countercurrent extraction (drip extraction) or column extraction. Extraction conditions are not particularly limited and can be selected as appropriate depending on the extraction method.

One preferred embodiment of the green tea beverage of the present invention is a beverage comprising a green tea extract as a primary component. As referred to above, the "beverage comprising a green tea extract as a primary component" refers to a beverage in which the designation of green tea, such as "green tea", "green tea extract" or the like, is listed high on a list of ingredients labeled in accordance with the Food Labeling Act of Japan (effective on April 2015). Said beverage is preferably a beverage in which the designation of green tea is listed first or second on a list of ingredients, more preferably a beverage in which the designation of green tea is listed first on a list of ingredients.

A roasted tea beverage, which is prepared with roasted tea leaves obtained by roasting the aforementioned tea leaves classified as non-fermented tea leaves over high heat, has a unique roasted aroma, and a clean smooth taste on the palate because of low contents of catechins and amino acids. In contrast, the green tea beverage of the present invention is a green tea beverage characterized by having a profound and rich taste like *Gyokuro* imparted thereto. However, there is little need to impart a profound and rich taste to a roasted tea beverage, since a roasted tea beverage is characterized by its clean taste. Thus, in a preferred embodiment, the tea beverage of this invention is not a roasted tea beverage. Examples of roasted tea beverages include, but are not limited to, a liquid consisting solely of an extract from roasted tea leaves, a liquid prepared by mixing an extract from roasted tea leaves as a principle component with an extract from unroasted green tea leaves, or a liquid prepared by adding an additive(s) to such a liquid as mentioned above. As referred to above, the "extract from roasted tea leaves as a principle component" means that the concentration of solids derived from the roasted tea extract is not less than 80% by mass, preferably not less than 90% by mass, based on the solids concentration of the whole extract.

The green tea beverage of the present invention is a green tea beverage characterized by having an enhanced rich taste (deep taste) like *Gyokuro.* In general, the taste is broadly classified into five categories: sweet, sour, bitter, salty and *umami* tastes. It is known that the taste of a green tea beverage is largely affected by *umami* and bitter tastes. According to this invention, the deep taste (also called "body") of a green tea beverage, which is the sum of *umami* and bitter tastes, can be satisfactorily enhanced. As referred to herein, the green tea beverage having a favorable deep taste refers to a green tea beverage having unique *umami* and bitter tastes like *Gyokuro* tea -- *i.e.,* a green tea beverage having "a profound and rich taste". By using the taste enhancer of this invention, the deep taste of a green tea beverage can be enhanced to make the beverage taste close to a profound and rich taste like *Gyokuro* tea.

### Caffeic acid

In the present invention, caffeic acid is used to enhance the profound and rich taste of a green tea beverage. In one embodiment, this invention is directed to a taste enhancer for a green tea beverage, the taste enhancer comprising caffeic acid as an essential active ingredient. Caffeic acid, also called 3,4-dihydroxycinnamic acid, is an aromatic carboxylic acid having a structure in which hydroxylation occurs at para- and meta- positions of cinnamic acid structure, and is classified as one of phenylethanoids (CAS Registry No. 331-39-5).

In the present invention, any types of caffeic acid products commonly used in the food and beverage field can be used without particular limitation. Therefore, the origin of caffeic acid is not particularly limited -- for example, both chemically synthesized and naturally occurring caffeic acid products can be used. Naturally occurring caffeic acid products can be in any form, including purified product, crude purified product, or extracted essence. It is known that examples of plants containing caffeic acid include sweet potato (*Ipomoea batatas*), potato (*Solanum tuberosum* L.), yam (*Dioscorea* L.), radish (*Raphanus sativus* var. *sativus*), cabbage (*Brassica oleracea* var. *capitata*), burdock (*Arctium lappa* L.), Japanese butterbur (*Petasites japonicus* (Siebold et Zucc.) Maxim.), tomato (*Solanum lycopersicum* L.), coconut (*Cocos nucifera*), coffee (*Coffea*), mulberry (*Morus*) leaves, and kuding tea. Extracts obtained from such plants can be used. *Inter alia*, a mulberry leaf essence is advantageously used from the viewpoint that the influence on the aroma of a green tea beverage can be minimized.

When the taste enhancer of the present invention is added to a green tea beverage, the amount added of the taste enhancer can be determined based on the content of caffeic acid as an essential active ingredient in the beverage. In a preferred embodiment, the content of caffeic acid is in the range of from 0.003 to 0.14 mg per 100 mL of the green tea beverage. When the caffeic acid content in the green tea beverage is less than 0.003 mg/100 mL, the taste enhancement effect is too weak. On the other hand, when the caffeic acid content in the green tea beverage is more than 0.14 mg/100 mL, it is more likely that the bitter and astringent tastes of caffeic acid may cause the green tea beverage to be perceived as having a peculiar aroma.

From the viewpoint that the effect of this invention can be exhibited more significantly, it is preferred that the caffeic acid content in the green tea beverage should be not less than 0.004 mg/100 mL, more preferably not less than 0.01 mg/100 mL. The upper limit of the caffeic acid content is preferably not more than 0.12 mg/100 mL, more preferably not more than 0.1 mg/100 mL. The caffeic acid content in the green tea beverage can be measured using high-performance liquid chromatography (HPLC).

### Chlorogenic acid

The taste enhancer of the present invention may comprise chlorogenic acid as an essential active ingredient. Chlorogenic acid, also called 3-caffeoylquinic acid, is a compound having a structure in which the carboxyl group of caffeic acid is condensed by dehydration with the hydroxyl group at 3-position of quinic acid (CAS Registry No.327-97-9). It is known that chlorogenic acid, one of polyphenols isolated from coffee beans, has sour and astringent tastes, and that when high concentrations of chlorogenic acid is present in a tea beverage, it causes the beverage to taste bitter and fishy (refer to Japanese Unexamined Patent Application Publication No. JP 2009-11202). However, the effect of addition of chlorogenic acid in enhancing the taste of foods and beverages has been totally unknown in the art.

In the present invention, any types of chlorogenic acid products commonly used in the food and beverage field can be used without particular limitation. Therefore, the origin of chlorogenic acid is not particularly limited -- for example, both chemically synthesized and naturally occurring caffeic acid products can be used. Naturally occurring caffeic acid products can be in any form, including purified product, crude purified product, or extracted essence. Examples of essences extracted from plants rich in chlorogenic acid include essences extracted from kuding tea, yerba mate (*Ilex paraguariensis*) tea, mulberry leaves, Simon batatas (*Ipomoea batatas*) leaves, basil (*Ocimum basilicum* L.), mugwort (*Artemisia indica Willd.* var. *maximowiczii*), sunflower (*Helianthus annuus* L.) seeds, unripe fruits of apple (*Malus domestica*), coffee beans, cones of *Pinaceae* family plants, seed husks of *Pinaceae* family plants, sugarcane (*Saccharum officinarum*), heavenly bamboo (*Nandina domestica* Thunb.) leaves, burdock (*Arctium lappa* L.), eggplant (*Solanum melongena* L.) peels, Japanese apricot (*Prunus mume*) fruits, coltsfoot (*Tussilago farfara* L.), and *Vitaceae* family plants. *Inter alia*, a mulberry leaf essence is advantageously used from the viewpoint that the influence on the aroma of a green tea beverage can be minimized.

When the taste enhancer of the present invention is added to a green tea beverage, the amount added of the taste enhancer can be determined based on the content of chlorogenic acid as an essential active ingredient in the beverage. The content of chlorogenic acid is in the range of from 0.07 to 5 mg per 100 mL of the green tea beverage. When the chlorogenic acid content in the green tea beverage is less than 0.07 mg/100 mL, the taste enhancement effect is not adequate. On the other hand, when the chlorogenic acid content is more than 5 mg/100 mL, it is more likely that the sour and astringent tastes of chlorogenic acid may cause the green tea beverage to be perceived as having a peculiar aroma.

From the viewpoint that the effect of this invention can be exhibited more significantly, it is preferred that the lower limit of the chlorogenic acid content should be not less than 0.1 mg, more preferably not less than 0.15 mg, per 100 mL of the green tea beverage. The upper limit of the chlorogenic acid content is preferably not more than 4 mg, more preferably not more than 3 mg, per 100 mL of the green tea beverage. The chlorogenic acid content in the green tea beverage can be measured using high-performance liquid chromatography (HPLC).

In the present invention, by adding caffeic acid or chlorogenic acid to a green tea beverage, the deep taste of the green tea beverage, which is the sum of *umami* and bitter tastes, can be effectively enhanced. From the viewpoint that the taste enhancement effect of this invention can be exhibited significantly, it is preferred that the green tea beverage should contain specified amounts of an *umami* taste component and a bitter taste component. In particular, when *umami* and bitter taste components derived from green tea leaves are contained in a green tea beverage, the complex taste typical of green tea is enhanced in the green tea beverage.

Examples of *umami* taste components derived from green tea leaves include theanine, which is an amino acid component. Examples of bitter taste components derived from green tea leaves include caffeine and catechins. While catechins are generally known as astringent taste components, they are classified herein as one of bitter taste components that form the deep taste of a green tea beverage. Theanine, caffeine and catechins are commonly found in a green tea leaf extract, but may be additionally added to a green tea beverage depending on the desired effect.

In the case of adding theanine, any of L-theanine, D-theanine, and DL-theanine can be used. In particular, among them, L-theanine is preferably used, because it is accepted for use as a food additive in foods and the like, and is easily available from the viewpoint of cost. Also, theanine can be in any form, including purified product, crude purified product, or extracted essence. For example, a green tea essence can be used. Examples of commercially available theanine products include Suntheanine^{®} produced by Taiyo Kagaku Co., Ltd. In the case of adding theanine, the amount of theanine added can be determined based on the theanine content in the beverage.

The theanine content in the green tea beverage is preferably in the range of from 0.2 to 15 mg per 100 mL of the green tea beverage. From the viewpoint that the effect of the present invention can be exhibited significantly, it is preferred that the lower limit of the theanine content should be not less than 0.5 mg, more preferably not less than 1 mg per 100 mL of the green tea beverage. In the case of adding theanine to a packaged green tea beverage prepared through heat sterilization, when the theanine content is more than 15 mg per 100 mL of the green tea beverage, a heat deterioration odor is more likely to occur, interfering with the effect of the present invention. The theanine content is preferably not more than 13 mg, more preferably not more than 10 mg, per 100 mL of the green tea beverage. The theanine content in the beverage can be measured using an automatic amino acid analysis method.

The form of caffeine is not particularly limited as long as it is of a quality that can be used in beverages. Caffeine can be in any form that can be used as a food additive, including purified product, crude purified product, or extracted essence (green tea essence). The amount of caffeine added can be determined based on the caffeine content in the beverage. From the viewpoint that the effect of the present invention can be exhibited significantly, it is preferred that the lower limit of the caffeine content should be not less than 0.1 mg, more preferably not less than 0.5 mg, still more preferably not less than 1 mg, per 100 mL of the green tea beverage. The upper limit of the caffeine content is preferably not more than 30 mg, more preferably not more than 25 mg, still more preferably not more than 20 mg, per 100 mL of the green tea beverage. The caffeine content in the beverage can be measured using HPLC.

In a preferred embodiment, the green tea beverage of the present invention comprises a catechin, or more specifically comprises a gallated catechin and/or a non-gallated catechin. It is only necessary that the green tea beverage of this invention should comprise at least one of eight types of catechins. As referred to herein, the "catechin(s)" is a generic term that encompasses non-gallated catechins such as catechin, gallocatechin, epicatechin and epigallocatechin, and gallated catechins such as catechin gallate, gallocatechin gallate, epicatechin gallate and epigallocatechin gallate. When a catechin is added to a green tea beverage, the form of the catechin is not particularly limited as long as it is a quality that can be used in beverages. The catechin can be in any form that can be used as a food additive, including purified product, crude purified product, or extracted essence (green tea essence). In the case of adding a catechin, the amount of the catechin added can be determined based on the catechin content in the beverage.

In the present invention, the lower limit of the catechin content is preferably not less than 5 mg, more preferably not less than 7 mg, still more preferably not less than 10 mg, per 100 mL of the green tea beverage. The upper limit of the catechin content is preferably not more than 60 mg, more preferably not more than 55 mg, still more preferably not more than 49 mg, per 100 mL of the green tea beverage. As referred to herein, the catechin content refers to a total content of catechin, gallocatechin, epicatechin, epigallocatechin, catechin gallate, gallocatechin gallate, epicatechin gallate and epigallocatechin gallate. The catechin content in the beverage can be measured using HPLC.

As described above, a green tea beverage comprising specified amounts of caffeic acid, theanine as an *umami* taste component, and caffeine and a catechin as bitter taste components is one of preferred embodiments of the green tea beverage of the present invention having an enhanced taste. To be specific, the green tea beverage of this invention is a green tea beverage comprising from 0.003 to 0.14 mg of caffeic acid, from 0.2 to 15 mg of theanine, from 0.1 to 30 mg of caffeine, and from 5 to 60 mg of a catechin, per 100 mL of the beverage.

Also, a green tea beverage comprising specified amounts chlorogenic acid, theanine as an *umami* taste component, and caffeine and a catechin as bitter taste components is one of preferred embodiments of the green tea beverage of the present invention having an enhanced taste. To be specific, the green tea beverage of this invention is a green tea beverage comprising from 0.07 to 5 mg of chlorogenic acid, from 0.2 to 15 mg of theanine, from 0.1 to 30 mg of caffeine, and from 5 to 60 mg of a catechin, per 100 mL of the beverage.

In addition to the aforementioned components, the green tea beverage of the present invention may have various additives optionally added thereto, to the extent that there is no deviation from the intended object of this invention. Examples of various additives include antioxidant, pigment, emulsifier, preservative, vitamin, essence, and flavoring. Such additives can be used alone or in combination.

Further, the green tea beverage of the present invention has a pH of preferably from 5.0 to 7.0, more preferably from 5.5 to 6.5. When the beverage has an acidic pH, particularly a pH of less than 5, the sour taste renders the beverage relatively weak in the taste typical of green tea, so that the taste enhancement effect of this invention become less perceivable. The pH of the beverage can be adjusted, as appropriate, using a pH adjustor such as sodium hydrogen carbonate or sodium hydroxide. The pH of the beverage can be measured at 20°C using a commercially available pH meter.

The green tea beverage of the present invention may be in the form of a packaged green tea beverage. In general, the taste of a green tea beverage is less perceivable when the beverage is drunk at ambient or lower temperatures as compared to when drunk hot. However, since the green tea beverage of this invention having a taste enhancer added thereto has an enhanced taste, the taste of the green tea beverage can be perceived pronouncedly even when the green tea beverage packed in a package is drunk in ambient or lower temperature regions. Further, the taste of a packaged green tea beverage is deteriorated by a unique treatment (e.g., heat sterilization or pH adjustment with an alkaline salt) during its production. However, since the green tea beverage of this invention having a taste enhancer added thereto has an enhanced taste, the green tea beverage is advantageous in that even when the beverage is produced in a packaged form, the taste of the beverage can be perceived pronouncedly. Thus, from the viewpoint that the effect of this invention can be exhibited significantly, a packaged green tea beverage is one of preferred embodiments of this invention.

The package used for the packaged green tea beverage of the present invention can be any of known packages used for common beverages. For example, a resin package, a metal package, a paper package, a glass package, or the like can be advantageously used. In one embodiment, the packaged green tea beverage can be provided in a form packed and sealed in, for example, a molded package mainly made of polyethylene terephthalate (so-called PET bottle), a metal can, a paper package combined with a metallic foil or plastic film, or a glass bottle. The volume of the green tea beverage of this invention is not particularly limited, and is for example in the range of from 100 mL to 3000 mL, preferably from 350 mL to 2000 mL, more preferably from 500 to 1000 mL.

### EXAMPLES

Hereunder, the present invention will be specifically described in detail by way of experimental examples, but this invention is not limited to these examples. Unless otherwise stated herein, all numerical ranges are inclusive of their endpoints.

### Quantification of different components

### (1A) Caffeic acid

A sample solution was appropriately diluted with distilled water for HPLC (produced by FUJIFILM Wako Pure Chemical Corporation), and then mixed well with an equal amount of ethanol for HPLC (produced by FUJIFILM Wako Pure Chemical Corporation). 2 mL of the mixed solution was filtered by centrifugation using a centrifugal filter (Ultrafree-CL GV, pore size: 0.22 µm, produced by Merck), and the obtained filtrate was used as an analysis sample. Quantification was carried out by the absolute calibration curve method or the internal standard method using the areas of peaks detected in a chromatogram reconstituted for the MS range set based on the LC/MS analysis results. The instruments and conditions employed are detailed below.
- HPLC system: 1290 Infinity II (produced by Agilent Technologies)
- Column: CORTECS UPLC T3 1.6 µm, 2.1 × 150 mm (produced by Waters)
- Column temperature: 40°C
- Mobile phase: (A) aqueous solution of 0.1% formic acid (for LC/MS, produced by Thermo Fisher Scientific), (B) acetonitrile (for LC/MS, produced by FUJIFILM Wako Pure Chemical Corporation)
- Mobile phase gradient conditions: 5% B (0-1 min.) → 100% B (29.5-31.5 min.); waiting time for equilibration: 4.0 min.
- Flow rate: 0.4 mL/min.
- Injection volume: 2 µL
- Mass spectrometer: Q Exactive Focus LC-MS/MS system (produced by Thermo Fisher Scientific)
- Ionization mode: HESI (heated electrospray ionization)
- Ionization unit conditions: Sheath gas flow rate: 50, aux gasflow rate: 10, sweep gas flow rate: 0, spray voltage pos: 3.50/neg 2.50|kV|, capillary temp: 350°C, S-Lens RF level: 50.0, aux gas heater temp: 300°C
- Mass spectroscopy unit conditions: Scan measurement on the Orbitrap, duration time: 32.0 min., polarity switching, resolution: 70000, AGC target: 3e6, scan range: m/z 100 to 1500
- Divert valve: Waste line (0-1.8 min.), MS line (1.8-31.99 min.)
- The quantifier ion used was: m/z 179.03498 (negative) for caffeic acid. The retention time was determined by analyzing the reference standard. The MS range was set to 5 to 10 ppm. If there is a difference in mass, the m/z value of the aforementioned quantifier ion can be shifted as appropriate.

If no good peak shape or sensitivity is obtained using the aforementioned ion, the AGC target may be changed or the SIM mode may be used.

### (1B) Chlorogenic acid

A sample solution was appropriately diluted with distilled water for HPLC (produced by FUJIFILM Wako Pure Chemical Corporation), and then mixed well with an equal amount of ethanol for HPLC (produced by FUJIFILM Wako Pure Chemical Corporation). 2 mL of the mixed solution was filtered by centrifugation using a centrifugal filter (Ultrafree-CL GV, pore size: 0.22 µm, produced by Merck), and the obtained filtrate was used as an analysis sample. Quantification was carried out by the absolute calibration curve method or the internal standard method using the areas of peaks detected in a chromatogram reconstituted for the MS range set based on the LC/MS analysis results. The instruments and conditions employed are detailed below.
- HPLC system: 1290 Infinity II (produced by Agilent Technologies)
- Column: CORTECS UPLC T3 1.6 µm, 2.1 × 150 mm (produced by Waters)
- Column temperature: 40°C
- Mobile phase: (A) aqueous solution of 0.1% formic acid (for LC/MS, produced by Thermo Fisher Scientific), (B) acetonitrile (for LC/MS, produced by FUJIFILM Wako Pure Chemical Corporation)
- Mobile phase gradient conditions: 5% B (0-1 min.) → 100% B (29.5-31.5 min.); waiting time for equilibration: 4.0 min.
- Flow rate: 0.4 mL/min.
- Injection volume: 2 µL
- Mass spectrometer: Q Exactive Focus LC-MS/MS system (produced by Thermo Fisher Scientific)
- Ionization mode: HESI (heated electrospray ionization)
- Ionization unit conditions: Sheath gas flow rate: 50, aux gasflow rate: 10, sweep gas flow rate: 0, spray voltage pos: 3.50/neg 2.50|kV|, capillary temp: 350°C, S-Lens RF level: 50.0, aux gas heater temp: 300°C
- Mass spectroscopy unit conditions: Scan measurement on the Orbitrap, duration time: 32.0 min., polarity switching, resolution: 70000, AGC target: 3e6, scan range: m/z 100 to 1500
- Divert valve: Waste line (0-1.8 min.), MS line (1.8-31.99 min.)
- The quantifier ion used was: m/z 353.08780 (negative) for chlorogenic acid. The retention time was determined by analyzing the reference standard. The MS range was set to 5 to 10 ppm. If there is a difference in mass, the m/z value of the aforementioned quantifier ion can be shifted as appropriate.

If no good peak shape or sensitivity is obtained using the aforementioned ion, the AGC target may be changed or the SIM mode may be used.

### (2) Theanine

Theanine was measured using an automatic amino acid analysis method.
- Analyzer: JCL-500/V2 (produced by JEOL Ltd.)
- Column: LCR-6, ϕ4 mm × 120 mm (produced by JEOL Ltd.)
- Mobile phase: Lithium citrate buffer (P-12 to P-15, P-21) (produced by JEOL Ltd.)
- Reactant solution: Ninhydrin Coloring Solution Kit II for JEOL (produced by FUJIFILM Wako Pure Chemical Corporation)
- Flow rate: mobile phase: 0.50 mL/min., reactant solution: 0.30 mL/min.
- Measurement wavelength: 570 nm

### (3) Catechins

A green tea beverage was filtered by a filter (0.45 µm) and quantified using reference standards (standard samples) by HPLC (high-performance liquid chromatography). Quantification of catechins was carried out using reference standards of catechin, epicatechin, gallocatechin, epigallocatechin, catechin gallate, epicatechin gallate, gallocatechin gallate, and epigallocatechin gallate (Kurita high-purity reagents).

### (HPLC analysis conditions)

- HPLC system: Tosoh HPLC system LC8020 model II
- Column: TSKgel ODS80T sQA (4.6 mm × 150 mm)
- Column temperature: 40°C
- Mobile phase A: Water/acetonitrile/trifluoroacetic acid (90:10:0.05)
- Mobile phase B: Water/acetonitrile/trifluoroacetic acid (20:80:0.05)
- Detection: UV 275 nm
- Injection volume: 20 µL
- Flow rate: 1 mL/min.
- Gradient program:

| Time (min.) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

### Experiment A1: Production and evaluation of green tea beverages

Different green tea beverages (pH: about 6) containing caffeic acid in different amounts as indicated in the table given below were produced by adding caffeic acid (produced by Nacalai Tesque, purity: 98%) to a green tea beverage (Sample A1-1) obtained mainly using lightly fired *Sencha* tea leaves. The different green tea beverages produced in this experiment contained 5 mg of theanine, 10 mg of caffeine, and 33 mg of catechins per 100 mL of the beverage.

The produced green tea beverages were subjected to sensory evaluation for deep taste (profound and rich taste) by five professional panelists. With Sample A1-1 being used as a control, the ratings given by each professional panelist based on the following criteria were discussed again in a free-form manner among all the panelists, and the final ratings were assigned as integer values in consensus among them. The deep taste of green tea beverages, which is perceived as the sun of *umami* and bitter tastes, was rated mainly from the viewpoint of "a profound and rich taste" like the taste of *Gyokuro* tea.
- 4 points: An enhanced deep taste is strongly perceived.
- 3 points: An enhanced deep taste is perceived.
- 2 points: An enhanced deep taste is slightly perceived.
- 1 point: No enhanced deep taste is perceived (the deep taste is comparable to that perceived in Sample A1-1).

The sensory evaluation results are shown in the table given below. It was confirmed that when caffeic acid was added to green tea beverages, the beverages became stronger in favorable deep taste and tasted profound and rich -- *i.e.,* the taste of the green tea beverages was enhanced. Additionally, with regard to Sample A1-15, which had a caffeic acid content of 0.18 mg/100 mL, enhancement of taste was observed, but the powdery taste of caffeic acid was strongly perceived so that the palatability of the green tea beverage was decreased.

**[Table 1-1]**

| Sample | A1-1 | A1-2 | A1-3 | A1-4 | A1-5 | A1-6 | A1-7 | A1-8 |
|---|---|---|---|---|---|---|---|---|
| Caffeic acid content (mg/100 mL) | 0.002 | 0.003 | 0.004 | 0.005 | 0.008 | 0.01 | 0.015 | 0.02 |
| Sensory rating (deep taste) | 1 | 2 | 3 | 4 | 4 | 4 | 4 | 4 |

| Sample | | A1-9 | A1-10 | A1-11 | A1-12 | A1-13 | A1-14 | A1-15 |
|---|---|---|---|---|---|---|---|---|
| Caffeic acid content (mg/100 mL) | | 0.03 | 0.05 | 0.1 | 0.11 | 0.12 | 0.14 | 0.18 |
| Sensory rating (deep taste) | | 4 | 4 | 4 | 4 | 4 | 4 | 4 |

### Experiment A2: Production and evaluation of green tea beverages

Different green tea beverages (pH: about 6) containing caffeic acid in different amounts as indicated in the table given below were produced by adding caffeic acid (produced by Nacalai Tesque, purity: 98%) to a green tea beverage (Sample A2-1) obtained mainly using heavily fired *Sencha* tea leaves. The different green tea beverages produced in this experiment contained 1.1 mg of theanine, 18 mg of caffeine, and 46 mg of catechins per 100 mL of the beverage.

The produced green tea beverages were subjected to sensory evaluation by following the same procedure as in Experiment A1, with Sample A2-1 being used as a control.

The sensory evaluation results are shown in the table given below. Like in Experiment A1, when caffeic acid was added to green tea beverages, the beverages became stronger in favorable deep taste and tasted profound and rich -- *i.e.,* the taste of the green tea beverages was enhanced. Additionally, with regard to Sample A2-9, which had a caffeic acid content of 0.18 mg/100 mL, enhancement of taste was observed, but the powdery taste of caffeic acid was perceived so that the palatability of the green tea beverage was decreased. Also, although the ratings for Samples A2-7 and A2-8 were the same, some panelists reported that the powdery taste of caffeic acid was slightly perceived in Sample A2-8.

**[Table 1-2]**

| Sample | A2-1 | A2-2 | A2-3 | A2-4 | A2-5 | A2-6 | A2-7 | A2-8 | A2-9 |
|---|---|---|---|---|---|---|---|---|---|
| Caffeic acid content (mg/100 mL) | 0.001 | 0.003 | 0.004 | 0.01 | 0.02 | 0.05 | 0.06 | 0.14 | 0.18 |
| Sensory rating (deep taste) | 1 | 2 | 3 | 4 | 4 | 4 | 4 | 4 | 4 |

### Experiment A3: Production and evaluation of green tea beverages

Different green tea beverages (pH: about 6) containing caffeic acid in different amounts as indicated in the table given below were produced by adding caffeic acid (produced by Nacalai Tesque, purity: 98%) to a green tea beverage (Sample A3-1) obtained using *Gyokuro* tea leaves as a source material. The different green tea beverages produced in this experiment contained 13.2 mg of theanine, 18 mg of caffeine, and 34 mg of catechins per 100 mL of the beverage.

The produced green tea beverages were subjected to sensory evaluation for taste by following the same procedure as in Experiment A1, with Sample A3-1 being used as a control.

The sensory evaluation results are shown in the table given below. When caffeic acid was added to green tea beverages, the taste of the green tea beverages was enhanced.

**[Table 1-3]**

| Sample | A3-1 | A3-2 | A3-3 | A3-4 |
|---|---|---|---|---|
| Caffeic acid content (mg/100 mL) | 0.001 | 0.003 | 0.01 | 0.03 |

### Experiment B1: Production and evaluation of green tea beverages

Different green tea beverages (pH: about 6) containing chlorogenic acid in different amounts as indicated in the table given below were produced by adding chlorogenic acid (produced by Nacalai Tesque, purity: 98%) to a green tea beverage (Sample B1-1) obtained from a tea leaf material mainly composed of lightly fired *Sencha* tea leaves. The different green tea beverages produced in this experiment contained 5 mg of theanine, 10 mg of caffeine, and 33 mg of catechins per 100 mL of the beverage.

The produced green tea beverages were subjected to sensory evaluation for deep taste (profound and rich taste) by five professional panelists. With Sample B1-1 being used as a control, the ratings given by each professional panelist based on the following criteria were discussed again in a free-form manner among all the panelists, and the final ratings were assigned as integer values in consensus among them. The deep taste of green tea beverages, which is perceived as the sun of *umami* and bitter tastes, was rated mainly from the viewpoint of "a profound and rich taste" like the taste of *Gyokuro* tea.
- 4 points: An enhanced deep taste is strongly perceived.
- 3 points: An enhanced deep taste is perceived.
- 2 points: An enhanced deep taste is slightly perceived.
- 1 point: No enhanced deep taste is perceived (the deep taste is comparable to that perceived in Sample B1-1).

The sensory evaluation results are shown in the table given below. It was confirmed that when chlorogenic acid was added to green tea beverages, the beverages became stronger in favorable deep taste and tasted profound and rich -- *i.e.,* the taste of the green tea beverages was enhanced. Additionally, with regard to Sample B1-15, which had a chlorogenic acid content of 6 mg/100 mL, enhancement of taste was observed, but the sour taste of chlorogenic acid was strongly perceived so that the palatability of the green tea beverage was decreased. Also, although the aftertaste ratings for both of Samples B1-13 and B1-14 were the same 4 points, some panelists reported that the sour taste of chlorogenic acid was slightly perceived in Sample B1-14.

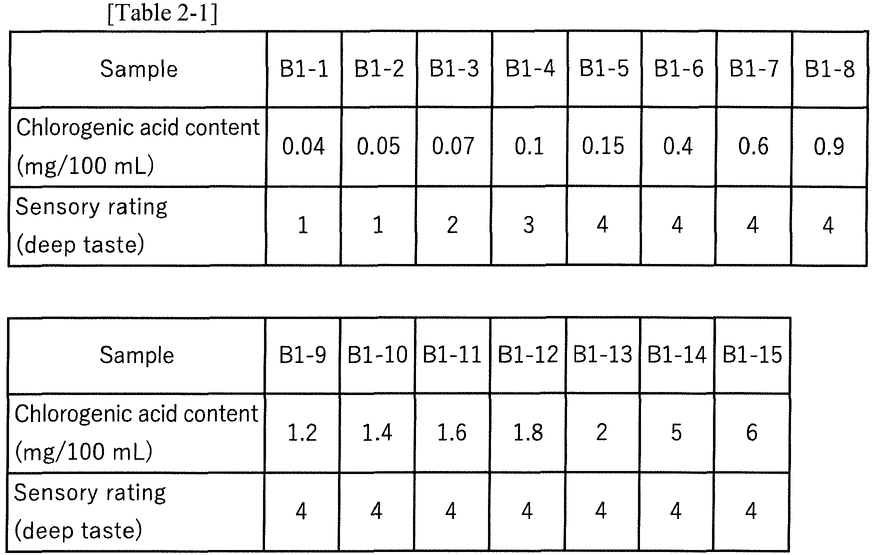

### Experiment B2: Production and evaluation of green tea beverages

Different green tea beverages (pH: about 6) containing chlorogenic acid in different amounts as indicated in the table given below were produced by adding chlorogenic acid (produced by Nacalai Tesque, purity: 98%) to a green tea beverage (Sample B2-1) obtained mainly using heavily fired *Sencha* tea leaves. The different green tea beverages produced in this experiment contained 1.1 mg of theanine, 18 mg of caffeine, and 46 mg of catechins per 100 mL of the beverage.

The produced green tea beverages were subjected to sensory evaluation by following the same procedure as in Experiment B1, with Sample B2-1 being used as a control.

The sensory evaluation results are shown in the table given below. Like in Experiment B1, when chlorogenic acid was added to green tea beverages, the beverages became stronger in favorable deep taste and tasted profound and rich -- *i.e.,* the taste of the green tea beverages was enhanced. Additionally, with regard to Sample B2-9, which had a chlorogenic acid content of 6 mg/100 mL, enhancement of taste was observed, but the sour taste of chlorogenic acid was perceived so that the palatability of the green tea beverage was decreased.

**[Table 2-2]**

| Sample | B2-1 | B2-2 | B2-3 | B2-4 | B2-5 | B2-6 | B2-7 | B2-8 | B2-9 |
|---|---|---|---|---|---|---|---|---|---|
| Chlorogenic acid content (mg/100 mL) | 0.04 | 0.07 | 0.1 | 0.6 | 1 | 1.3 | 1.5 | 5 | 6 |
| Sensory rating (deep taste) | 1 | 2 | 3 | 4 | 4 | 4 | 4 | 4 | 4 |

### Experiment B3: Production and evaluation of green tea beverages

Different green tea beverages (pH: about 6) containing chlorogenic acid in different amounts as indicated in the table given below were produced by adding chlorogenic acid (produced by Nacalai Tesque, purity: 98%) to a green tea beverage (Sample B3-1) obtained using *Gyokuro* tea leaves as a source material. The different green tea beverages produced in this experiment contained 13.2 mg of theanine, 18 mg of caffeine, and 34 mg of catechins per 100 mL of the beverage.

The produced green tea beverages were subjected to sensory evaluation for taste by following the same procedure as in Experiment B1, with Sample B3-1 being used as a control.

The sensory evaluation results are shown in the table given below. When chlorogenic acid was added to green tea beverages, the deep aftertaste of the green tea beverages was enhanced.

**[Table 2-3]**

| Sample | B3-1 | B3-2 | B3-3 | B3-4 |
|---|---|---|---|---|
| Chlorogenic acid content (mg/100 mL) | 0.02 | 0.07 | 0.7 | 1 |
| Sensory rating (deep taste) | 1 | 2 | 4 | 4 |

## Claims

1. A green tea beverage comprising from 0.003 to 0.14 mg of caffeic acid or from 0.07 to 5 mg of chlorogenic acid per 100 mL of the beverage.

2. The green tea beverage according to claim 1, having a catechin content of not more than 60 mg per 100 mL of the beverage.

3. The green tea beverage according to claim 1 or 2, comprising caffeic acid not derived from green tea.

4. The green tea beverage according to claim 1 or 2, comprising chlorogenic acid not derived from green tea.

5. A method for producing a green tea beverage comprising from 0.003 to 0.14 mg of caffeic acid or from 0.07 to 5 mg of chlorogenic acid per 100 mL of the beverage, the method comprising adding caffeic acid or chlorogenic acid.

6. The method according to claim 5, wherein the green tea beverage has a catechin content of not more than 60 mg per 100 mL of the beverage.

7. A taste enhancer for a green tea beverage, the taste enhancer comprising caffeic acid or chlorogenic acid as an active ingredient.

8. A method for enhancing the taste of a green tea beverage comprising from 0.003 to 0.14 mg of caffeic acid or from 0.07 to 5 mg of chlorogenic acid per 100 mL of the beverage, the method comprising adding caffeic acid or chlorogenic acid.

9. The method according to claim 8, wherein the green tea beverage has a catechin content of not more than 60 mg per 100 mL of the beverage.
